# EUROPEAN PATENT APPLICATION

(11) **EP 2 287 012 A1**
(43) Date of publication of application: **23.02.2011**
(21) Application number: 09460037.6
(22) Date of filing: 21.08.2009
(51) Int. Cl.: B42D 15/10

(54) **Inlet for security documents in the form of a booklet**

(71) Applicant: Polska Wytwornia Papierow Wartosciowych S.A., 00-222 Warszawa (PL)
(72) Inventor: Lis, Andrzej, 04-118 Warszawa (PL); Kilian, Daniel Tadeusz, 05-500 Mysiadlo (PL); Mellin, Dariusz, 01-390 Warszawa (PL); Szczesnowicz, Radoslaw, 02-943 Warszawa (PL)

(57) **Abstract**

Inlet for security document booklets in the form of a laminate with a layer (3) with electronic elements, a layer (4) made of flexible material whose part serving as the hinge (5) extends beyond the surface of the inlet laminate and whose other part is laminated between external layers of the inlet laminate (1, 2).

## Description

The object of the invention is a modification of the inlet construction consisting in introduction of an additional element permanently attached to the inlet and rendering it possible to manufacture a page with personalised data for biometric documents in the form of a booklet in a manner simpler than it has been possible hitherto.

An inlet is a multilayer structure made of thermohardened plastic. In one of the layers of the inlet there is incorporated a microprocessor chip on which individual characteristics of the document holder, such as face image or dermatoglyphic patterns of fingers, are stored in the course of the personalisation process. An antenna connected to the inlet allows the document to communicate with external devices. The data is stored in electronic form and read by specialised equipment, which allows a quick and precise authentication of the document holder, which effectively counteracts all attempts of counterfeit.

A complete data page contains also layers which make it possible to apply permanently-with the use of laser engraving-identification data of the document holder. All layers of the data page are combined with the inlet in the course of the laminating process into one whole. A data page manufactured in this manner is stiff, which makes it impossible to sew it directly into the booklet.

Various kinds of indirect elements rendering it possible to sew the data page together with the remaining pages of the booklet must be used to attach the data page described above to the booklet. The intermediate element-a hinge-should be flexible, but at the same time tough in order to ensure the required durability of the document. It should also be permanently integrated with the data page.

The solutions employed hitherto are based on the implementation of an intermediate element integrated with the data page at the stage of laminating of the entire page. Various manners of attaching the hinge to the data page are described below.

Patent application WO9819870 concerns a connection in which a part of the data page designed for sewing with the remaining pages has between the laminate layers a layer made, for instance, of polyvinyl alcohol or polyvinyl butyrate. As a result the laminate layers of the data page close to the stitch may move in relation to each other, which improves the durability of the data page and thus the durability of the whole document.

Other known solutions provide for utilisation of an additional element designed to attach the laminate with personalised data to the remaining pages of the document. European patent specification EP1245407 presents a solution in which the laminate with the personalised data is re-laminated with a flexible layer of a greater surface area, as a result of which only a part of the said flexible layer overlaps with the laminate with the personalised data. The remaining part of the flexible layer extends beyond the surface of the laminate with personalised data. This part is designed for attaching the data page prepared in this manner to the remaining pages of the document.

European patent specification EP1380442 presents another solution in which one layer of the laminate of the data page is made of a flexible material. The laminating is carried out with the use of material preventing the lamination of the layer made of flexible material with the remaining laminate layers in the part of the card designed for the stitch. Subsequently, all remaining laminate layers in this part are removed. As a result of this process we obtain a data page with a side flexible element designed for sewing the data page together with the remaining pages of the document.

Patent application WO2005028209 contains a description of a solution in which the data page contains a layer of flexible material and at least one layer of a different kind. The layer made of flexible material extends beyond the surface of the page and thus constitutes the part of the page designed for sewing it together with the other pages of a document in the form of a booklet. All layers are laminated together.

The laminate layer made of flexible material does not always bind with remaining layers in a satisfactory manner. Therefore, solutions improving that bond have been developed. European patent specification EP1502765 presents for example a solution in which one layer made of flexible material in the part designed for lamination with the remaining layers has a number of protuberances which enhance the bond.

There are also known data pages in which data is not written on the entire surface of the page; a margin with no data is left. In this case various solutions are employed on the margin serving to attach the card to the remaining pages of the document. For instance, patent application W02004110780 contains a description of a solution in which a flexible connection extending beyond the data page is laminated only in the margin area. European patent specification EP1780043 presents a similar solution in which the effectiveness of the flexible connection is enhanced with the use of perforation.

In the present invention the hinge, which in the future will serve for connecting the data page with the booklet, is integrated with the inlet during the initial lamination in the course of the inlet manufacturing process. The hinge is made of flexible material that is additionally reinforced with fibre and/or fabric and/or net made of material resistant to bending. A part of the material is laminated between the layers building the inlet, the other one extends beyond the surface of the inlet. If made in the most favourable manner, the laminated part of the hinge does not cover the entire surface of the inlet. In other case the material of the hinge may constitute one of the external layers of the inlet itself, which may also be very favourable.

The result of this is an inlet differing from those applied hitherto, equipped with a hinge ready to be laminated in the final data page. This allows to considerably simplify the technological process of the data page itself.

An example of the invention is presented in a drawing in which:
- Figure 1 shows a section of the inlet with a hinge laminated inside on the entire surface of the inlet,
- Figure 2 shows a section of the inlet with a hinge laminated inside on a part of the inlet's surface,
- Figure 3 shows a section of the inlet with a hinge laminated on the external surface of the inlet.

In order to improve the legibility of the drawings, individual layers were separated from each other and shown not in proportion to the real thickness of individual layers.

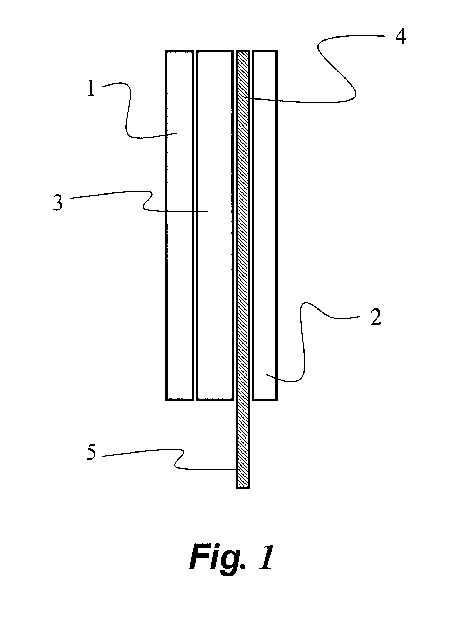

An example inlet presented in Figure 1 has layer 3 with electronic elements between external layers 1 and 2, and layer 4 made of flexible material along the entire surface. A part of layer 4 extends beyond the surface of the other layers of the inlet and constitutes hinge 5 designed for sewing the data page together with other pages of the document in the form of a booklet.

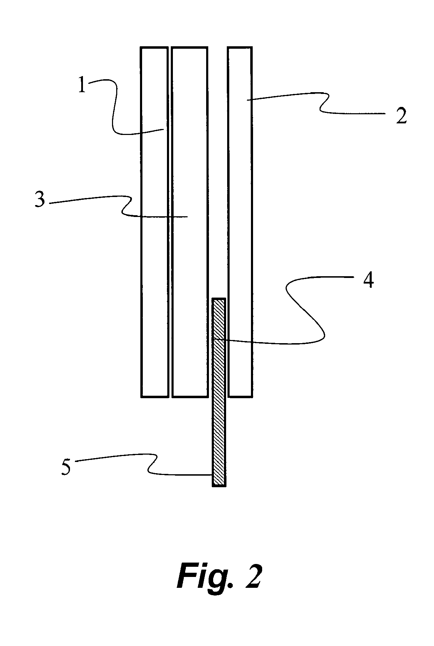

An example inlet presented in Figure 2 has layer 3 with electronic elements between external layers 1 and 2 and layer 4 made of flexible material reinforced with a polyethylene terephthalate net along a part of its surface. A part of layer 4 extends beyond the surface of the other layers of the inlet and constitutes hinge 5 designed for sewing the data page together with other pages of the document in the form of a booklet.

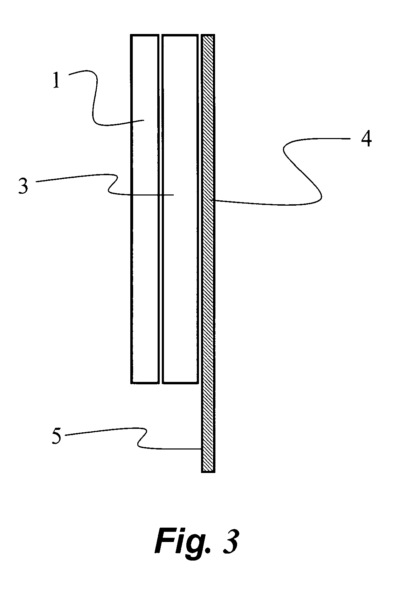

In the sample inlet presented in Figure 3 one of the external layers is substituted with layer 4, which further simplifies the structure of the inlet.

## Claims

1. Inlet for security document booklets in the form of a laminate with a layer with electronic elements, distinguished by the feature that its one layer (4) is made of flexible material whose part serving as the hinge (5) extends beyond the surface of the inlet laminate and whose other part is laminated between external layers of the inlet laminate (1, 2).

2. In accordance with claim no. 1, the inlet is distinguished by the feature that a part of layer (4) is laminated between external layers (1, 2).

3. According to claim no. 1 or 2, the inlet is distinguished by the feature that the material of layer (4) is reinforced with fibre and/or fabric and/or net.

4. According to claim no. 3, the inlet is distinguished by the feature that layer (4) is made of polyurethane reinforced with a polyethylene terephthalate net.
